# EUROPÄISCHE PATENTSCHRIFT

(11) **EP 1 760 346 B1**
(45) Veröffentlichungstag und Bekanntmachung des Hinweises auf die Patenterteilung: **08.02.2012**
(21) Anmeldenummer: 06014523.2
(22) Anmeldetag: 13.07.2006
(51) Int. Cl.: F16D 1/072, F16D 1/068

(54) **Drehmomentübertragende Verbindung einer Hohlwelle mit einem rohrförmigen Anschlussbauteil**
Torque transmitting connection of a hollow shaft and a tubular connecting element
Accouplement pour la transmssion de couple d'un arbre creux et d'un élément tubulaire

(30) Priorität: 29.08.2005 DE 102005041020
(43) Veröffentlichungstag der Anmeldung: 07.03.2007
(73) Patentinhaber: Benteler Automobiltechnik GmbH, 33104 Paderborn (DE)
(72) Erfinder: Böke, Johannes, Dr., 32825 Blomberg (DE); Wienströer, Martin, 33334 Gütersloh (DE)
(74) Vertreter: Ksoll, Peter

(56) Entgegenhaltungen:
- DE-A1- 4 412 615
- DE-C1- 10 133 183
- GB-A- 2 004 980
- JP-A- 1 153 808
- US-A- 5 253 947

## Beschreibung

Die Erfindung betrifft eine drehmomentübertragende Verbindung einer Hohlwelle mit einem rohrförmigen Anschlussbauteil.

Derartige Verbindungen sind z.B. bei Kardanwellen erforderlich. Gabeln von Kreuzgelenken sind hierbei beispielsweise mit einer als Hohlwelle ausgeführten Kardanwelle zu verbinden. Die Hauptanforderungen an Kardanwellen insbesondere im Kraftfahrzeugbereich bestehen darin, hohe Drehmomente bei möglichst geringem Gewicht und kleinem Bauraum zu übertragen.

Zur Erzeugung einer form- und/oder kraftschlüssigen Fügeverbindung zwischen Hohlwellen und rohrförmigen Anschlussbauteilen, insbesondere bei Vorliegen unterschiedlicher Werkstoffpaarungen, sind mehrere Verfahren bekannt, die jeweils eigene Vor- und Nachteile aufweisen: (Reib-)Schweißen, Löten, Clinchen, Kleben und Schrumpfen.

Bei der Herstellung von Reibschweiß- oder Schweißverbindungen ist die thermische Beeinflussung des Bauteils erheblich. Ferner können durch Reibschweißen lediglich rotationssymmetrische Bauteile gefügt werden. Nachteilig ist ferner die Oxidbildung. Lötverbindungen haben den Nachteil einer geringen Festigkeit, wobei die thermische Belastung des Bauteils und die Oxidbildung nicht vernachlässigt werden darf. Durch Clinchen kann eine Materialschwächung hervorgerufen werden. Nachteilig ist ferner, dass die Bauteile nur punktuell verbunden werden.

Reine Klebeverbindungen zeichnen sich durch eine teilweise zu geringe Festigkeit, insbesondere bei Drehmomentübertragung, aus. Ferner ist die Prozesssicherheit in der industriellen Fertigung problematisch. Es kann vorkommen, dass die Klebeschicht zwischen den Fügepartnern ungleichmäßig ist.

Letztlich ist es auch bekannt, Bauteile aufeinander zu schrumpfen. Als problematisch hierbei wird ebenfalls die teilweise nicht ausreichende Festigkeit der Verbindung angesehen. Ferner ist eine besondere Abstimmung der unterschiedlichen Ausdehnungskoeffizienten bei Paarungen unterschiedlicher Werkstoffe erforderlich.

Eine Verbindung nach dem Oberbegriff des Anspruchs 1 ist aus US-A-5,253,947 bekannt. Eine Verbindung nach dem Oberbegriff des Anspruchs 4 ist aus GB-A-2 004 980 bekannt.

Die Aufgabe der Erfindung besteht darin, eine drehmomentübertragende Verbindung einer Hohlwelle mit einem rohrförmigen Anschlussbauteil aufzuzeigen, bei der auch dünnwandige Hohlkörper aus gleichen oder unterschiedlichen Werkstoffen bei hoher Festigkeit in der Fügezone verbunden sind.

Diese Aufgabe wird mit den im Patentanspruch 1 angegebenen Merkmalen gelöst.

Eine weitere Lösung der Aufgabe wird in einem Gegenstand mit den Merkmalen des Patentanspruchs 4 gesehen.

Kerngedanke der Lösung nach Patentanspruch 1 ist, dass sich die Enden der Hohlwelle und des rohrförmigen Anschlussbauteils überlappen und über einen die Enden außen umgreifenden Klemmring gegeneinander gepresst sind. Das innenliegende Ende ist unter Einfluss des Klemmrings elastisch verformt und das außenliegende Ende unter Einfluss des Klemmrings plastisch verformt.

Mithin wird eine Verbindung erzeugt, die sowohl hohe Drehmomente übertragen kann als auch Biegebeanspruchungen standhält. Ferner ist es möglich, durch diese Verbindung Hohlwellen mit rohrförmigen Anschlussbauteilen gleicher oder unterschiedlicher Materialpaarung zu verbinden. Eine thermische Materialbeeinflussung erfolgt nicht, da die Bauteile bei Raumtemperatur fügbar sind.

Vorteilhafte Ausgestaltungen der Lösung nach Patentanspruch 1 sind Gegenstand der Ansprüche 2 und 3.

Der Werkstoff des außenliegenden Endes kann eine höhere Duktilität aufweisen als der Werkstoff des innenliegenden Endes. Dies gewährleistet auf einfache Weise, dass das außenliegende Ende sich unter Einfluss des Klemmrings plastisch verformt.

Zweckmäßigerweise kann zwischen die Enden ein Klebstoff eingebracht sein. Der Klebstoff dient hierbei zur weiteren Erhöhung der Festigkeit der Verbindung.

Die Lösung der Aufgabe gemäß Anspruch 4 sieht vor, dass die Enden der Hohlwelle und des rohrförmigen Anschlussbauteils stirnseitig gegenüberliegend angeordnet sind. Ein außenliegender Klemmring presst die Enden gegen einen innenliegenden Stützring. Der Klemmring und der Stützring erstrecken sich über beide Enden.

Durch diese Lösung ist es möglich, gleiche oder sehr ähnliche Außen- und Innendurchmesser aufweisende Hohlwellen und rohrförmige Anschlussbauteile miteinander zu koppeln. Im Übrigen weist diese Lösung die entsprechenden Vorteile der Lösung nach Patentanspruch 1 auf.

Vorteilhafte Ausführungsformen der Lösung nach Patentanspruch 4 sind Gegenstand der Patentansprüche 5 und 6.

Danach kann die Festigkeit der klemmenden Verbindung vorteilhaft dadurch erhöht werden, dass ein Klebstoff entweder zwischen dem Stützring und wenigstens einem Ende und/oder dem Klemmring und wenigstens einem Ende eingebracht ist.

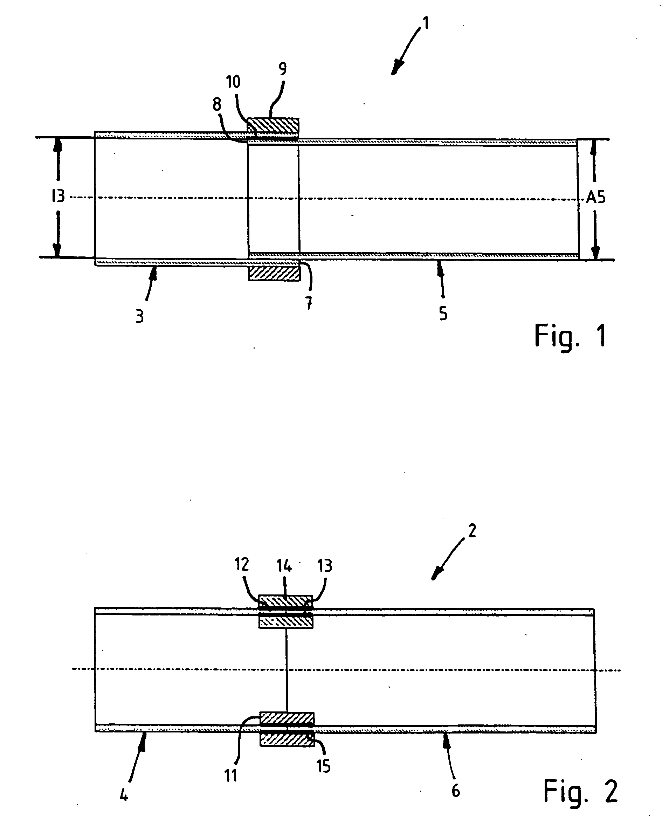

Die Erfindung wird nachfolgend anhand von zwei, in den Zeichnungen schematisch dargestellten Ausführungsbeispielen näher erläutert. Die Figuren 1 und 2 zeigen ausschnittsweise die erfindungsgemäße drehmomentübertragende Verbindung 1, 2 einer Hohlwelle 3, 4 mit einem rohrförmigen Anschlussbauteil 5, 6 im Querschnitt.

In der Figur 1 ist der Innendurchmesser 13 der Hohlwelle 3 größer als der Außendurchmesser A5 des sich anschließenden rohrförmigen Bauteils 5. Die Enden 7, 8 der beiden Bauteile 3, 5 überlappen sich. Im Bereich des Überlappungsstoßes werden die Enden 3, 5 durch einen Klemmring 9 gegeneinander gepresst. Unter Einwirkung des Klemmrings 9 ist das innenliegende rohrförmige Anschlussbauteil 5 elastisch verformt, während die außenliegende Hohlwelle 3 plastisch verformt ist. Die Hohlwelle 3 ist aus Aluminium gefertigt und weist mithin eine höhere Duktilität auf als das innenliegende, stählerne, rohrförmige Anschlussbauteil 5. Im Überlappungsstoß zwischen den Enden 7, 8 ist ferner ein Klebstoff 10 eingebracht.

In der Figur 2 sind die Hohlwelle 4 und das rohrförmige Anschlussbauteil 6 stirnseitig gegenüberliegend angeordnet. Ein innenliegender Stützring 11 übergreift beide Enden 12; 13 beider Bauteile 4; 6. Ein außenliegender Klemmring 14 übergreift ebenfalls die Enden 12, 13. Die Hohlwelle 4 besteht aus einem anderen Material als das rohrförmige Anschlussbauteil 6. Die Innen- und Außendurchmesser beider Bauteile 4, 6 unterscheidet sich nur unwesentlich. Zur Erhöhung der Festigkeit der Verbindung 2 ist ein Klebstoff 15 radial innenseitig des Klemmrings 14 und radial außenseitig des Stützrings 11 eingebracht.

### Bezugszeichen:

- 1 -: drehmomentübertragende Verbindung
- 2 -: drehmomentübertragende Verbindung
- 3 -: Hohlwelle
- 4 -: Hohlwelle
- 5 -: rohrförmiges Anschlussbauteil
- 6 -: rohrförmiges Anschlussbauteil
- 7 -: Ende v. 3
- 8 -: Ende v. 5
- 9 -: Klemmring
- 10 -: Klebstoff
- 11 -: Stützring
- 12-: Ende v. 4
- 13 -: Ende v. 6
- 14 -: Klemmring
- 15 -: Klebstoff

- A5 -: Außendurchmesser v. 5
- I3 -: Innendurchmesser v. 3

## Patentansprüche

1. Drehmomentübertragende Verbindung einer Hohlwelle (3) mit einem rohrförmigen Anschlussbauteil (5), wobei sich die Enden (7, 8) der Hohlwelle (3) und des rohrförmigen Anschlussbauteils (5) überlappen und über einen die Enden (7, 8) außen umgreifenden Klemmring (9) gegeneinander gepresst sind, **dadurch gekennzeichnet, dass** das innenliegende Ende (8) unter Einfluss des Klemmrings (9) elastisch verformt ist und das außenliegende Ende (7) unter Einfluss des Klemmrings (9) plastisch verformt ist.

2. Drehmomentübertragende Verbindung nach Anspruch 1, **dadurch gekennzeichnet, dass** der Werkstoff des außenliegenden Endes (7) eine höhere Duktilität aufweist als der Werkstoff des innenliegenden Endes (8).

3. Drehmomentübertragende Verbindung nach Anspruch 1 oder 2, **dadurch gekennzeichnet, dass** zwischen den Enden (7, 8) ein Klebstoff (10) eingebracht ist.

4. Drehmomentübertragende Verbindung einer Hohlwelle (4) mit einem rohrförmigen Anschlussbauteil (6), wobei die Enden (12, 13) der Hohlwelle (4) und des rohrförmigen Anschlussbauteils (6) stirnseitig gegenüberliegend angeordnet sind, **dadurch gekennzeichnet, dass** wenigstens ein außenliegender Klemmring (14) die Enden (12, 13) gegen einen innenliegenden Stützring (11) presst und wobei sich der Klemmring (14) und der Stützring (11) über beide Enden (12, 13) erstrecken.

5. Drehmomentübertragende Verbindung nach Anspruch 4, **dadurch gekennzeichnet, dass** zwischen dem Stützring (11) und wenigstens einem Ende (12; 13) ein Klebstoff (15) eingebracht ist.

6. Drehmomentübertragende Verbindung nach einem der Ansprüche 1 bis 5, **dadurch gekennzeichnet, dass** zwischen dem Klemmring (14) und wenigstens einem Ende (12; 13) ein Klebstoff (15) eingebracht ist.

## Claims

1. A torque transmitting connection of a hollow shaft (3) comprising a tubular connection component (5), in which the ends (7, 8) of the hollow shaft (3) and of the tubular connection component (5) overlap and are pressed against each other by a clamping ring (9) externally encompassing the ends (7, 8), **characterized in that** the inlying end (8) is elastically deformed under the influence of the clamping ring (9) and the external end (7) is plastically deformed under the influence of the clamping ring (9).

2. The torque transmitting connection of claim 1, **characterized in that** the material of the external end (7) has a higher ductility than the material of the inlying end (8).

3. The torque transmitting connection of claim 1 or 2, **characterized in that** an adhesive (10) is placed between the ends (7, 8).

4. A torque transmitting connection of a hollow shaft (4) comprising a tubular connection component (6), in which the ends (12, 13) of the hollow shaft (4) and of the tubular connection component (6) are arranged to be opposed at the front, **characterized in that** at least one external clamping ring (14) presses the ends (12, 13) against an inlying supporting ring (11) and that the clamping ring (14) and the supporting ring (11) extend over both ends (12, 13).

5. The torque transmitting connection of claim 4, **characterized in that** an adhesive (15) is placed between the supporting ring (11) and at least one end (12; 13).

6. The torque transmitting connection of any one of claims 1 to 5, **characterized in that** an adhesive (15) is placed between the clamping ring (14) and at least one end (12; 13).

## Revendications

1. Accouplement à transmission de couple d'un arbre creux (3) avec un composant de connexion (5) de forme tubulaire, dans lequel les extrémités (7, 8) de l'arbre creux (3) et du composant de connexion tubulaire (5) se chevauchent et sont pressées l'une contre l'autre via une bague de serrage (9) qui entoure les extrémités (7, 8) à l'extérieur, **caractérisé en ce que** l'extrémité intérieure (8) est déformée élastiquement sous l'influence de la bague de serrage (9), et l'extrémité extérieure (7) est déformée plastiquement sous l'influence de la bague de serrage (9).

2. Accouplement à transmission de couple selon la revendication 1, **caractérisé en ce que** le matériau de l'extrémité extérieure (7) présente une ductilité plus élevée que le matériau de l'extrémité intérieure (8).

3. Accouplement à transmission de couple selon la revendication 1 ou 2, **caractérisé en ce qu'**une colle (10) est introduite entre les extrémités (7, 8).

4. Accouplement à transmission de couple d'un arbre creux (4) avec un composant de connexion (6) de forme tubulaire, dans lequel les extrémités (12, 13) de l'arbre creux (4) et du composant de connexion tubulaire (6) sont agencées en opposition du côté frontal,
**caractérisé en ce qu'**au moins une bague de serrage extérieure (14) presse les extrémités (12, 13) contre une bague de soutien intérieure (11), et la bague de serrage (14) et la bague de soutien (11) s'étendent sur les deux extrémités (12, 13).

5. Accouplement à transmission de couple selon la revendication 4, **caractérisé en ce qu'**une colle (15) est introduite entre la bague de soutien (11) et au moins une extrémité (12 ; 13).

6. Accouplement à transmission de couple selon l'une des revendications 1 à 5, **caractérisé en ce qu'**une colle (5) est introduite entre la bague de serrage (14) et au moins une extrémité (12 ; 13).
